# EUROPEAN PATENT APPLICATION

(11) **EP 4 495 562 A1**
(43) Date of publication of application: **22.01.2025**
(21) Application number: 24186754.8
(22) Date of filing: 05.07.2024
(51) Int. Cl.: G01K 1/024, E01F 11/00, G01K 13/10, E01C 23/00

(54) **DEVICE AND SYSTEM FOR MEASURING A PHYSICAL PARAMETER RELATING TO THE PAVEMENT OF A ROAD INFRASTRUCTURE SECTION**

(30) Priority: 21.07.2023 IT 202300015381
(71) Applicant: MOVYON S.p.A., 00159 Roma (IT)
(72) Inventor: CHIOLA, Davide, 00159 Roma (IT); CARAMBIA, Benedetto, 00159 Roma (IT)
(74) Representative: Pietra, Giulia

(57) **Abstract**

It is disclosed a device for measuring a physical parameter relating to the pavement of a road infrastructure section. The device comprises a sensor, a clock unit, a radio transceiver and a processor. The device is operated cyclically in a sleeping mode and a listening mode. In sleeping mode, only the clock unit is switched on; in listening mode the radio transceiver and the processor are also switched on. When in listening mode a wake-up radio signal is detected, in response to it a measurement of the physical parameter is acquired and the measurement acquired is transmitted via radio. Also described is a system comprising a plurality of devices installed in the pavement during laying and a control device that, moving along the road infrastructure section, transmits to the devices a control signal, in response to which the devices transmit the respective measurements acquired.

## Description

### Technical field

The present invention relates in general to the field of devices and systems for the construction, monitoring and maintenance of road infrastructures. In particular, the present invention relates to a device for measuring a physical parameter relating to the pavement of a road infrastructure section. The present invention also relates to a system for measuring a physical parameter relating to the pavement of a road infrastructure section comprising said device.

### Background art

As known, the pavement of road infrastructures, such as road and motorway sections, bridges, etc., in general is made from asphalt concrete which, as known, is a visco-elastic plastic material comprising a mixture of aggregates (rock material of various particle sizes, such as filler, sand and gravel) and a bituminous binder. In general, the pavement comprises various layers of asphalt concrete, which are laid one over the other until a total thickness of the pavement typically comprised between 25 cm and 40 cm is reached.

In order to guarantee that vehicles can travel safely along a road infrastructure, it is important to monitor its pavement. For this purpose, it is known the use of sensors capable of detecting one or more physical parameters relating to the pavement, such as pressure, temperature, etc.. Temperature in particular is a physical parameter for which detection has an advantageous use in various applications.

WO 2013/082109, for example, describes a method for control of the pavement laying process, in which it is provided for the temperature sensors to be mixed with the pavement material and therefore laid with it. It is also provided for a wireless signal emitted by the temperature sensors to be monitored during the laying process, and for the laying process parameters to be adjusted on the basis of the wireless signal received.

### Summary of the invention

The Applicant has noticed that the specific application of the temperature sensors described by WO 2013/082109 (i.e. control of the pavement laying process) requires the temperature sensors installed in the pavement of a certain road section to keep functioning only up until the end of laying of the pavement of the road section, an operation that typically requires some hours at most. The temperature sensors of WO 2013/082109 may therefore be powered with respective batteries, the only requirement of which, in terms of duration, is that of supporting continual transmission of the wireless signal for some hours.

However, the Applicant has noticed that, for other applications, it may be necessary for the temperature sensors to be capable of functioning for a much longer period.

One of these applications is monitoring the bearing capacity or load-bearing capacity of the pavement, meaning the capacity of the pavement to support bending stresses and/or vertical compression caused by the transit of vehicles. The bearing capacity of the pavement is generally measured by means of a deflectometer. The deflectometer applies a load to a certain position of the pavement, which therefore deflects, forming a deflection basin. The deflectometer therefore measures the profile of the deflection basin (for example, by means of geophones or laser Doppler sensors), and obtains information on the bearing capacity of the pavement. For example, a curvature index of the deflection basin can be measured (SCI, or "Surface Curvature Index"), on the basis of which an estimate of the residual useful lifetime of the pavement can be calculated, a parameter that allows planning of replacement and/or maintenance interventions.

Various types of deflectometer are known. For example, impact deflectometers (such as FWD, or Falling Weight Deflectometers) are adapted to operate while stationary. If, therefore, the intention is to monitor the pavement of a road section, for example, the FWD must be operated while stationary and then moved into the next position, in order to obtain a set of discrete measurements of the deflection basin along the road section. In contrast, rolling mass deflectometers are known (such as the TSD, or Traffic Speed Deflectometers) that can operate in movement and that can therefore provide a continuous measurement of the deflection basin that forms as it passes. The TSD type of deflectometers can provide accurate results if their speed is comprised within a certain range, typically between 60 km/h and 90 km/h.

As observed by S. M. Nasimifar et al. "Temperature adjustment of Surface Curvature Index from Traffic Speed Deflectometer measurements", November 2018, International Journal of Pavement Engineering 21(11):1-11, the mechanical properties of the asphalt concrete that forms the pavement (in particular, its elastic modulus) depend to a great extent on its temperature. The bearing capacity of the pavement therefore also depends on the temperature.

The Applicant has noticed that a detection of the temperature of the pavement would allow the result provided by the deflectometer (for example, the SCI) to be normalized with respect to a reference temperature, for example 20°C, in order to take account of the effective temperature of the pavement in the position and time at which the deflectometer provides the results.

The Applicant has observed that, for this purpose, it would be advantageous to use temperature sensors installed in the pavement, possibly at a distance of at least 10 cm from the surface of the pavement. Measurement of the pavement temperature at this depth is indeed more repeatable and stable with respect to, for example, a measurement of the temperature of the surface of the pavement, a parameter that is subject to high variability, due to factors such as irradiation, wind or rain to which the pavement surface is exposed.

On the other hand, for this exemplary application, it is desirable for the temperature sensors to be able to operate (i.e. to detect the temperature and to transmit it to the deflectometer) for the entire life cycle of the pavement, meaning for the entire time that passes from laying of the pavement of a road section up until its subsequent removal and the new laying of the pavement of the same road section. Said period is generally 7-10 years.

In order to guarantee that the sensors are able to operate for such a lengthy time, in principle it would be possible to power them by means of a network of electric cables. However, this is an infrastructure external to the pavement, which increases the complexity and cost of the system. Furthermore, the power supply via cable is not very practicable in the case of monitoring of the pavement of long road sections (hundreds of kilometres or more), because the number of branches to be installed (one for each sensor) would be too high.

As an alternative, in principle it would be possible to provide the sensors with self-powering systems, such as wireless charging systems, for example. The Applicant has, however, observed that these systems are unlikely to be able to supply a sufficient quantity of electricity, especially where the sensor is installed inside the pavement at a certain distance (more than 10 cm) from its surface.

In view of the above, an object of the present invention is to provide a device for measuring a physical parameter relating to the pavement of a road infrastructure section (in particular, but not exclusively, the temperature) that solves the above drawbacks.

In particular, an object of the present invention is to provide a device for measuring a physical parameter relating to the pavement of a road infrastructure section (in particular, but not exclusively, the temperature) that is able to operate for a period of time compatible with the duration of the typical life cycle of said pavement (generally 7-10 years), so as to be installable during the pavement laying phase and to be suitable for applications that require a prolonged use of the measuring device, such as monitoring of the bearing capacity of the pavement.

According to embodiments of the present invention, this problem is solved by a measuring device comprising a sensor, a clock unit, a radio transceiver and a processor. The measuring device is operated cyclically in a sleeping mode for a period of a first predefined duration T1 and in a listening mode for a period of a second maximum predefined duration T2. In sleeping mode, only the clock unit is switched on for counting the first predefined duration T1, whereas in listening mode the radio transceiver and the processor are also switched on. When, in listening mode, a wake-up radio signal is detected, in response to detection of the wake-up radio signal the processor acquires, by means of the sensor, a measurement of the physical parameter relating to the pavement at the position of the measuring device and, by means of the radio transceiver, transmits the acquired measurement via radio.

Advantageously, the measuring device according to embodiments of the present invention is capable of operating for a period of time compatible with the duration of the typical life cycle of said pavement (generally 7-10 years), and is therefore installable in the pavement laying phase and suitable for applications that require a prolonged use of the measuring device, such as for example monitoring of the bearing capacity of the pavement.

As long as the measuring device does not detect any wake-up radio signal, indeed, it continues to cyclically alternate periods of duration T1, in which it is in sleeping mode, and periods of duration T2, in which it is in listening mode. If the wake-up radio signal is received with a low frequency (for example, 1 or 2 times per year, if the measuring device is used for monitoring the bearing capacity of the pavement), acquisition of the measurement of the physical parameter relating to the pavement and its transmission via radio are a rare event, which has an almost irrelevant impact on energy consumption by the measuring device. Therefore, since the energy consumption of the device in sleeping mode is extremely limited (typically in the order of several µA), the parameter that most greatly impacts on the energy consumption of the measuring device is the frequency with which the measuring device exits from sleeping mode and enters into listening mode. Said frequency depends, in turn, on the duty cycle of the measuring device, defined as the ratio between predefined duration T1 and maximum predefined duration T2. The greater the duty cycle (i.e. the greater duration T1 is with respect to duration T2), the lower the frequency with which the measuring device enters into listening mode, and therefore the lower its overall energy consumption. On the other hand, the greater the duty cycle, the lower the reactivity of the measuring device, i.e. the longer the time that the measuring device takes to react to a wake-up radio signal. Depending on the application for which the measuring device is used, it is therefore possible to find an appropriate trade-off between energy consumption of the measuring device (and, therefore, duration of the period for which the measuring device is operational) and the reactivity of the device itself, by choosing the value of duty cycle T1/T2 accordingly.

For example, setting T1 = 1200 ms and T2 = 8 ms a duty cycle of 150 is obtained. The Applicant has estimated that this value of the duty cycle allows the measuring device to be operational for a period of 7-10 years. This is obtained together with a reactivity of the measuring device that is acceptable for applications such as monitoring the bearing capacity. With these values of T1 and T2, a measuring device is therefore obtained that is capable of operating throughout the typical life cycle of the pavement, and that may therefore be installed in the pavement laying phase and be used for monitoring the bearing capacity throughout the life cycle of the pavement.

According to a first aspect, a measuring device is provided for measuring a physical parameter relating to the pavement of a road infrastructure section, the measuring device comprising a sensor, a clock unit, a radio transceiver and a processor, wherein:
- the measuring device is configured to be operated cyclically in a sleeping mode for a period of a first predefined duration T1 and in a listening mode for a period of a second maximum predefined duration T2, wherein in sleeping mode only the clock unit is switched on for counting the first predefined duration T1 and wherein in listening mode the radio transceiver and the processor are also switched on; and
- the processor is configured to, when in listening mode a wake-up radio signal is detected, in response to detection of the wake-up radio signal, acquire by means of the sensor a measurement of the physical parameter relating to the pavement at the position of the measuring device and, by means of the radio transceiver, transmit the acquired measurement via radio.

Preferably, the sensor is a temperature sensor suitable for acquiring at least one measurement of the temperature of a portion of the pavement adjacent to the measurement device.

Preferably, the measuring device also comprises a battery electrically connected to the sensor, to the clock unit, to the radio transceiver and to the processor, so as to supply electrical power to them.

Preferably, the measuring device also comprises a casing suitable for containing the sensor, the clock unit, the radio transceiver and the processor, wherein the casing comprises:
- a tubular body in a plastic material, inside which the sensor, the clock unit, the radio transceiver and the processor are housed; and
- a block of resin which encases the tubular body.

Preferably, the plastic material comprises chlorinated polyvinyl chloride and the resin comprises an epoxy resin.

Preferably, the ratio between the first predefined duration T1 and the second maximum predefined duration T2 is comprised between 100 and 200.

Preferably, the processor is configured to, in listening mode:
- if, upon expiry of the second maximum predefined duration T2, it determines that no radio signal has been received comprising a sequence of symbols corresponding to a preamble of an expected wake-up radio signal, return the measuring device into sleeping mode;
- if, before expiry of the second maximum predefined duration T2, it determines that a radio signal has been received comprising a sequence of symbols corresponding to the preamble, determine whether in the received radio signal the sequence of symbols is followed by a sequence of bytes corresponding to a synchronization word of the expected wake-up radio signal;
   - in the negative, return the measuring device to the sleeping mode; and
   - in the affirmative, determine whether the received radio signal comprises an identifier of the measurement device or a predefined value indicative of a broadcasting transmission mode of the expected wake-up radio signal;
      - in the affirmative, conclude that the received radio signal is the expected wake-up radio signal; and
      - in the negative, ignore the received radio signal and return the measuring device to the sleeping mode.

According to a second aspect, the present invention relates to a system for measuring a physical parameter relating to the pavement of a road infrastructure section, the system comprising:
- a plurality of measuring devices suitable for being installed inside the pavement in respective positions along the road infrastructure section, the plurality of measuring devices being suitable for being installed during the laying phase of the pavement, each of the measuring devices being as indicated above; and
- a control device movable along the road infrastructure section, the control device being configured to, while moving along the road infrastructure section, transmit a wake-up radio signal to at least one of the measuring devices and, in response to the wake-up radio signal, receive via radio from the at least one of the measuring devices a measurement of the physical parameter relating to the pavement of the road infrastructure section.

Preferably, at least one of the plurality of measuring devices is suitable for being located at a depth D with respect to the surface of the pavement, the depth D being greater than 5 cm.

Preferably, the respective positions of the measuring devices are substantially equally spaced by a distance L comprised between 100 m and 500 m.

According to an embodiment, the control device comprises a geographic position sensor and a memory which stores, for each measuring device, data indicative of the geographic position of the measuring device, the control device being configured to:
- periodically detect the geographic position of the control device (6) through the geographic position sensor;
- on the basis of the stored data indicative of the geographic position of the measuring devices, check whether at least one of the measuring devices is present near the control device; and
- in the affirmative, transmit the wake-up radio signal to the at least one of the measuring devices present near the control device. According to an embodiment, the control device is configured to transmit the wake-up radio signal in broadcasting mode.

Preferably, the control device is configured to:
- after transmission of the wake-up radio signal, enter into a waiting mode in which the control device waits to receive via radio from the at least one of the measuring devices the measurement of the physical parameter relating to the pavement of the road infrastructure section for a period of predefined duration T4; and
- if, upon expiry of the predefined duration T4, the control device determines that no measurement of the physical parameter relating to the pavement of the road infrastructure section has been received, transmit again the wake-up radio signal.

Preferably, the system also comprises a deflectometer movable along the road infrastructure section substantially integral with the control device, the deflectometer being configured to, while moving along the road infrastructure section integrally with the control device, acquire data indicative of the bearing capacity of the pavement of the road infrastructure section.

According to a third aspect, the present invention provides a method for measuring a physical parameter relating to the pavement of a road infrastructure section, the method comprising:
- installing a plurality of measuring devices within the pavement in respective positions along the road infrastructure section, the plurality of measuring devices being installed during the laying phase of the pavement, each one of the measuring devices comprising a sensor, a clock unit, a radio transceiver and a processor;
- operate each one of the measuring devices cyclically in a sleeping mode for a period of a first predefined duration T1 and in a listening mode for a period of a second maximum predefined duration T2, wherein in sleeping mode only the clock unit is switched on for counting the first predefined duration T1 and wherein in listening mode also the radio transceiver and the processor are switched on;
- by a control device moving along the road infrastructure section, transmitting a wake-up radio signal to at least one of the measuring devices;
- by the processor of at least one of the measuring devices in listening mode, detecting the wake-up radio signal and, in response to detection of the wake-up radio signal, acquiring by means of the sensor a measurement of the physical parameter relating to the pavement at the position of the measuring device and, by means of the radio transceiver, transmitting the acquired measurement via radio to the control device.

### Brief description of the drawings

The present invention will be clearer from the following detailed description, provided by way of non-limiting example, to be read with reference to the appended drawings, in which:
- Figure 1 shows a device for measuring a physical parameter relating to the pavement of a road infrastructure section, according to an embodiment of the present invention;
- Figure 2 shows the device of Figure 1 in use;
- Figures 3a, 3b and 3c show three views of the device of Figure 1, according to an embodiment of the present invention;
- Figure 4 is a flowchart of operation of the device of Figure 1;
- Figure 5 schematically shows the format of the radio signals received and transmitted by the measuring device, according to an embodiment;
- Figures 6a and 6b show operation of the measuring device, in the case in which no wake-up radio signal is received and in the case in which a wake-up radio signal is received, respectively;
- Figure 7 shows a system for measuring a physical parameter relating to the pavement of a road infrastructure section, according to an embodiment of the present invention;
- Figure 8 shows the structure of the control device comprised in the system of Figure 7, according to an embodiment of the present invention;
- Figure 9 is a flowchart of operation of the control device of Figure 8, according to an embodiment of the present invention; and
- Figures 10a, 10b and 10c are graphs showing the results of three tests performed by the Applicant on a measuring device according to embodiments of the present invention.

The Figures are not to scale.

### Detailed description of preferred embodiments of the invention

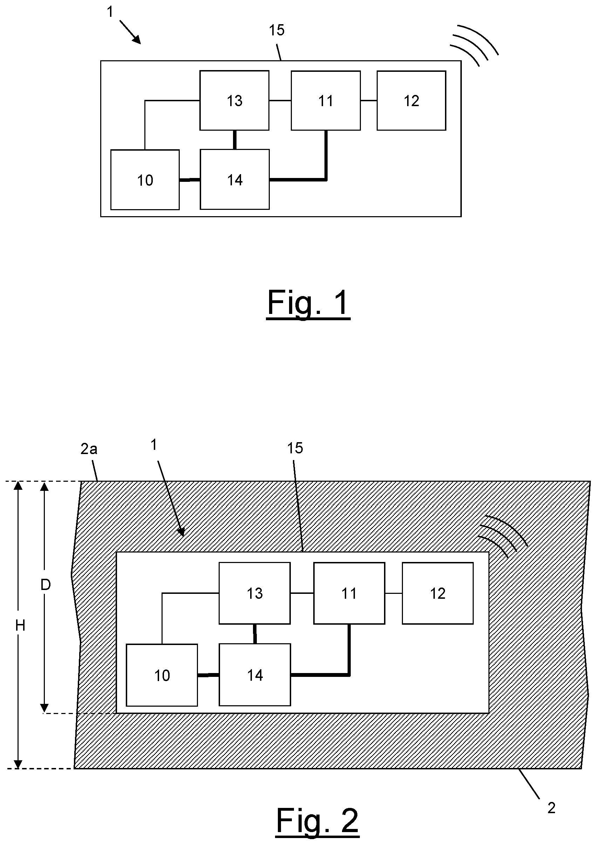

Figure 1 shows a device for measuring a physical parameter relating to the pavement of a road infrastructure section, such as for example a road or motorway section.

The measuring device 1 is suitable for being installed inside the pavement 2, as shown in Figure 2. The pavement 2 comprises a plurality of layers of asphalt concrete, laid one over the other until a total thickness H of the pavement 2 preferably comprised between 25 cm and 40 cm is reached. The measuring device 1 is suitable for being installed in the pavement 2 during the laying process of the pavement itself. Preferably, the measuring device 1, when installed, is located at a depth D with respect to the surface 2a of the pavement 2, where depth D means the distance between the surface 2a of the pavement 2 and the base of the measuring device 1, as schematically indicated in Figure 2. The depth D is preferably greater than 5 cm, more preferably greater than 10 cm, for example 15 cm.

The measuring device 1 comprises a sensor 10 suitable for acquiring at least one measurement of a physical parameter (for example, but not exclusively, the temperature) relating to the pavement 2 at the position of the measuring device 1. For example, the sensor 10 may be a temperature sensor suitable for acquiring at least one measurement of the temperature of the portion of the pavement adjacent to the measurement device 1. In particular, the temperature sensor 10 is suitable for acquiring at least one measurement of the temperature at the base of the measuring device 1. In order to improve the dynamic response of the measurement, a copper sheet (not shown in the drawing) that extends across the base of the device 1 may be fixed (for example with a thermally conductive tape or paste) onto the temperature sensor 10. The temperature sensor 10 preferably has a measurement range comprised between -10°C and +60°C. The temperature sensor 10 also preferably has an accuracy greater than or equal to 1/10 °C. For example, the Applicant has performed several positive tests using the temperature sensor model TMP117 manufactured and marketed by the company Texas Instruments Inc., with head office in Dallas (Texas, US).

The measuring device 1 also preferably comprises a clock unit 11 configured to count a period of predefined duration T1, as will be discussed in further detail here below.

The measuring device 1 also preferably comprises a radio transceiver 12. The radio transceiver 12 may, for example, operate in a band below 1 GHz (frequencies under GHz) without licenses. Furthermore, the radio transceiver 12 may use LoRa (Long Range) modulation, or FSK (Frequency-Shift Keying) modulation.

The measuring device 1 also preferably comprises a processor 13 connected to the sensor 10 and to the radio transceiver 12, so as to coordinate their operation. The processor 13 may be made as a single component, or with two or more components connected to and cooperating with each other.

The measuring device 1 preferably also comprises a battery 14. The battery 14 is preferably electrically connected (through an electrical circuit, not shown in Figure 1) to the sensor 10, to the clock unit 11, to the radio transceiver 12 and to the processor 13, so as to supply electrical power to these components. The battery 14, for example, may be a 3.6 V and 2.4 Ah lithium thionyl chloride battery.

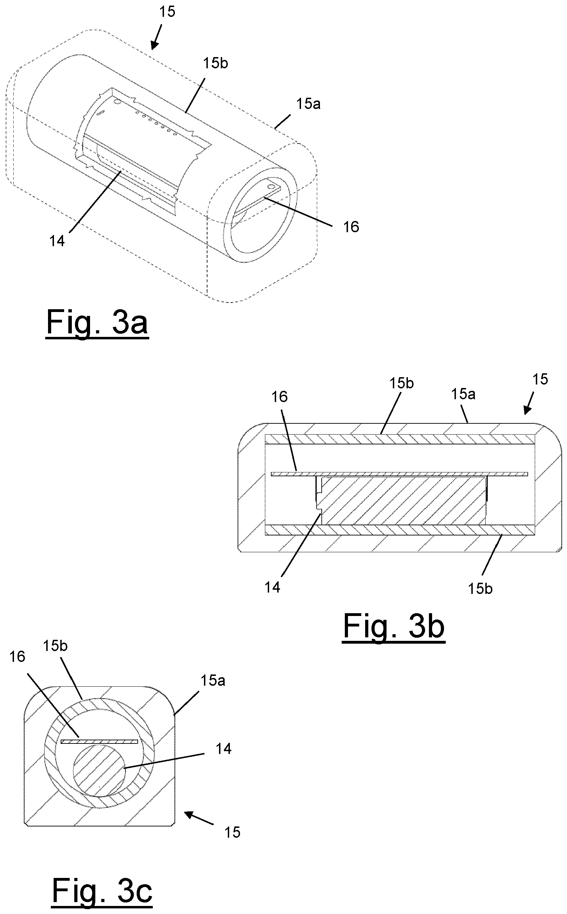

The sensor 10, the clock unit 11, the radio transceiver 12, the processor 13 and the battery 14 are preferably mounted on a PCB (Printed Circuit Board) 16, shown in Figures 3a, 3b and 3c (in Figures 3a, 3b and 3c, in order not to overload the drawings, only the battery 14 is shown, whereas the sensor 10, the clock unit 11, the radio transceiver 12 and the processor 13 are not shown).

The measuring device 1 also comprises a casing 15 suitable for containing all the other components of the measuring device 1. The structure and material(s) of the casing 15 are preferably chosen in a manner to resist the conditions (in particular, temperature, pressure, vibrations and mechanical stresses) to which the measuring device 1 is subjected during the laying process of the pavement 2. The temperature during laying of the pavement 2, in particular, may reach 150°.

Figures 3a, 3b and 3c show the casing 15 according to an embodiment of the present invention.

The casing comprises a tubular body 15a inside which the sensor 10, the clock unit 11, the radio transceiver 12, the processor 13 and the battery 14 are housed. The tubular body 15a is preferably made in a plastic material. For example, the tubular body 15a may be in PVC-C (chlorinated polyvinyl chloride). The diameter of the tubular body 15a is preferably comprised between 20 mm and 30 mm, for example 25 mm. The length of the tubular body 15a is preferably comprised between 70 mm and 90 mm, for example 80 mm.

The tubular body 15a is preferably encased inside a block of resin 15b. The block of resin 15b is preferably formed around the tubular body 15a by means of a resining process of the tubular body 15a. For forming of the block of resin 15b, a silicon mould is preferably used. The tubular body 15a is preferably sealed at its ends, for example by means of rubber caps or impermeable adhesive films, in order to prevent the resin from entering into contact with the components of the measuring device 1, in particular with the antenna of the radio transceiver 12.

The block in resin 15b is preferably in epoxy resin. The epoxy resin preferably has a temperature range comprised between -50°C and +150°C, a permittivity at 10 Hz equal to 4.7 ± 20% and a Shore hardness comprised between D45 and D60. The Applicant has performed positive tests using the ER1448 epoxy resin manufactured and marketed by the company Electrolube, with head office in Woking (Surrey, U K).

The block of resin 15b preferably has a quadrangular prism shape, preferably with rounded edges. The length of the block of resin 15b (where "length" means its dimension in the direction parallel to the axis of the tubular body 15a) is preferably comprised between 100 mm and 120 mm, for example 110 mm. Perpendicularly to the axis of the tubular body 15a, the block of resin 15b has a height preferably comprised between 30 mm and 50 mm, for example 40 mm; and a width preferably comprised between 60 mm and 80 mm, for example 70 mm.

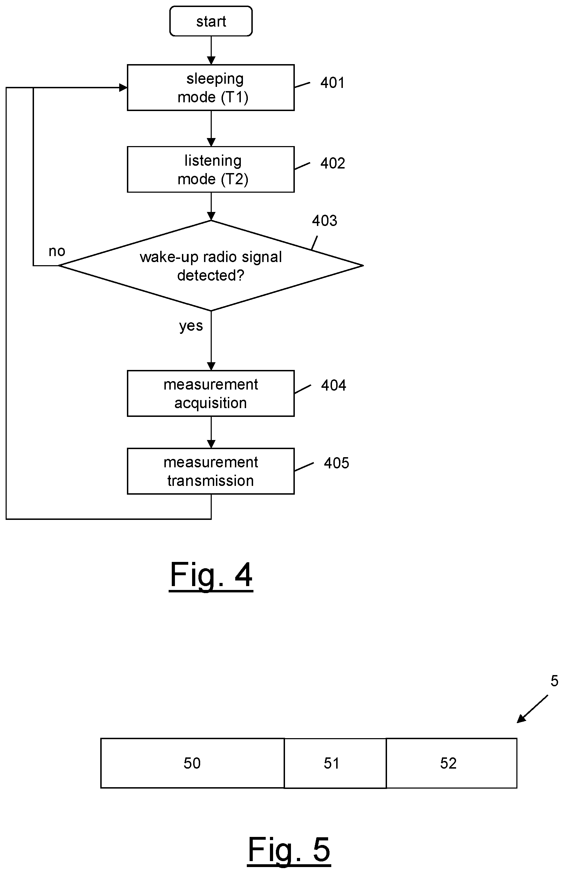

With reference to the flowchart of Figure 4, operation of the measuring device 1 according to an embodiment of the present invention will now be described.

Preferably, the measuring device 1 is operated in a sleeping mode (step 401) and in a listening mode (step 402) cyclically and alternately.

In sleeping mode, only the clock unit 11 is switched on. All the other components of the measuring device 1 are switched off, so that it is not able either to transmit or to receive radio signals. Since the clock unit 11 has an extremely limited energy consumption (typically in the order of several µA), the energy consumption of the measuring device 1 in sleeping mode is therefore extremely limited. At each iteration of step 401, the measuring device 1 remains in sleeping mode for a period of time having predefined duration T1, counted by the clock unit 11.

Upon expiry of T1, the clock unit 11 sends an electric signal to the radio transceiver 12 and to the processor 13. The electric signal switches on the radio transceiver 12 and the processor 13, so that the measuring device 1 enters into the listening mode. In listening mode, the measuring device 1 is therefore able to receive radio signals.

In particular, at each iteration of step 402, the measuring device 1 starts listening for any wake-up radio signals through the radio transceiver 12. At each iteration of step 402, the measuring device 1 remains in listening mode for a period of time having maximum predefined duration T2.

If, upon expiry of maximum predefined duration T2, the processor 13 determines that through the radio transceiver 12 no wake-up radio signal has been received (step 403), it preferably returns the measuring device 1 into sleeping mode (step 401), switching off itself and the radio transceiver 12.

If, on the other hand, before expiry of the maximum duration T2, the processor 13 determines that through the radio transceiver 12 a wake-up radio signal has been received, it preferably acquires through the sensor 10 a measurement of a physical parameter relating to the pavement 2 (step 404).

Then, the processor 13 preferably transmits via radio the measurement acquired through the radio transceiver 12 (step 405).

At the end of the transmission, the processor 13 preferably returns the measuring device 1 into sleeping mode (step 401), switching off itself and the radio transceiver 12. The cyclic and alternating iteration of steps 401 and 402 therefore starts again, until a new wake-up radio signal is received.

The operation of the measuring device 1 described above continues for as long as the components of the measuring device 1 are able to operate, i.e. until complete discharging of the battery 14.

Advantageously, the measuring device 1 is capable of operating for a period of time compatible with the period of the typical life cycle of the pavement (generally 7-10 years), and can therefore be installed in the pavement 2 laying phase and be used for applications that require a prolonged use of the measuring device 1, such as the aforesaid monitoring of the bearing capacity of the pavement.

As long as the measuring device 1 does not detect any wake-up radio signal, indeed, it continues to alternate cyclically periods of duration T1, in which it is in sleeping mode, and periods of duration T2, in which it is in listening mode. If the wake-up radio signal is received with a low frequency (for example, 1 or 2 times per year, if the measuring device is used for monitoring the bearing capacity of the pavement), acquisition of the measurement of the physical parameter relating to the pavement 2 (step 404) and its transmission via radio (step 405) are a rare event, which has an almost irrelevant impact on energy consumption by the measuring device 1. Therefore, since the energy consumption of the measuring device 1 in sleeping mode is extremely limited (typically in the order of several µA, i.e. equal to the energy consumption of the clock unit 11), the parameter that most greatly impacts on the energy consumption of the measuring device 1 is the frequency with which the measuring device 1 exits from sleeping mode and enters into listening mode. Said frequency depends in turn on the duty cycle of the measuring device 1, defined as the ratio between duration T1 and duration T2. The greater the duty cycle (i.e. the greater duration T1 with respect to duration T2 is), the lower the frequency with which the measuring device 1 enters into listening mode, and therefore the lower its overall energy consumption. On the other hand, the greater the duty cycle, the lower the reactivity of the measuring device 1, i.e. the longer the time that the measuring device 1 takes to react to a wake-up radio signal. Depending on the application for which the measuring device 1 is used, it is therefore possible to find an appropriate trade-off between energy consumption of the measuring device 1 (and, therefore, the duration of the period for which the measuring device is operational) and the reactivity of the device 1 itself, choosing the value of duty cycle T1/T2 accordingly. Where low energy consumption is important, whereas a lower reactivity is acceptable, a higher duty cycle T1/T2 may be chosen. If, on the other hand, an application requires a higher reactivity, a lower duty cycle T1/T2 may be chosen.

The duty cycle T1/T2 may, for example, be comprised between 100 and 200, preferably between 140 and 160. For example, setting T1 = 1200 ms and T2 = 8 ms obtains a duty cycle of 150. Considering that the average consumption of the measuring device 1 in listening mode is equal to around 0.0535 mAs, the Applicant has estimated that this value of the duty cycle allows the measuring device 1 to be operational for a period of around 9.8 years. This is obtained together with a reactivity of the measuring device 1 that is acceptable for applications such as monitoring the bearing capacity. With these values of T1 and T2, a measuring device 1 is therefore obtained that is capable of operating throughout the typical life cycle of the pavement 2, and that may therefore be installed in the laying phase of the pavement 2 and be used for monitoring the bearing capacity throughout the life cycle of the pavement 2.

Step 403 of detecting the wake-up radio signal, according to an embodiment of the present invention, will be described in further detail below.

According to this embodiment, the radio transceiver 12 is configured to receive and transmit radio signals, whose format is schematically shown in Figure 5. The radio signal (indicated with reference number 5) preferably comprises a plurality of fields, including a preamble 50, a synchronization word 51 and a payload 52. In the case in which the radio signal 5 is a wake-up radio signal specifically intended for the measuring device 1, the payload 52 may comprise an identifier ID(1) of the measuring device 1. If, on the other hand, the radio signal 5 is a wake-up radio signal transmitted in broadcasting mode to several identical devices to the measuring device 1, the payload 52 may comprise a predefined value that indicates the broadcasting transmission mode. The radio signal 5 may be, for example, an FSK signal. In this case, the preamble 50 comprises 7,625 symbols, the synchronization word 51 comprises 3 bytes and the payload 52 comprises 8 bytes. In addition to the aforementioned fields, a Length field of 1 byte and a CRC field of 2 bytes are also present.

According to a preferred embodiment, in listening mode the measuring device 1 (in particular, the processor 13) preferably remains in listening mode for any radio signals comprising a sequence of symbols corresponding with the preamble 50.

If, upon expiry of maximum duration T2, the processor 13 determines that through the radio transceiver 12 no wake-up radio signal comprising a sequence of symbols corresponding with the preamble 50 has been received, it preferably returns the device 1 into sleeping mode (step 401).

If, on the other hand, before expiry of the maximum duration T2, the processor 13 determines that through the radio transceiver 12 a wake-up radio signal comprising a sequence of symbols corresponding with the preamble 50 has been received, it preferably determines whether this is followed by a sequence of bytes corresponding with the synchronization word 51. This check allows the processor 13 to establish whether the radio signal received actually is a radio signal having the expected format (i.e. identical to the radio signal 5) or whether it is noise, i.e. a radio signal that only accidentally comprises a sequence of symbols corresponding with the preamble 50. In order to perform this check, the processor 13 preferably compares the sequence of bytes (8 bytes, in the case of an FSK signal) that follows the sequence of symbols corresponding with the preamble 50 in the radio signal received with the synchronization word 51 locally stored by the measuring device 1.

If they do not coincide, the processor 13 concludes that the radio signal received is noise, and therefore returns to sleeping mode (step 401). If, on the other hand, they coincide, the processor 13 preferably determines that it is actually a radio signal having the expected format (i.e. identical to the one of the radio signal 5), and therefore reads its payload.

If the payload comprises the identifier ID(1) of the measuring device 1 or the predefined value that indicates the broadcasting transmission mode, the processor 13 preferably concludes that the radio signal received is actually a wake-up radio signal destined for the measuring device 1. It therefore performs steps 404 (acquisition of a measurement of a physical parameter relating to the pavement 2 by means of the sensor 10) and 405 (transmission via radio of the measurement acquired by means of the radio transceiver 12).

In particular, insofar as concerns step 404, the processor 13 may send to the sensor 10 a trigger signal that starts the acquisition of the measurement. While the measurement is being performed, the processor 13 may be partially disabled, leaving enabled only an internal timer (not shown in the drawings) that counts a period of predefined duration T3. The duration T3 is preferably comprised between 100 ms and 200 ms, for example it may be 160 ms.

Insofar as concerns step 405, the processor 13 preferably transmits via radio through the radio transceiver 12 a response radio signal, whose format is also identical to the format of the radio signal 5 shown in Figure 5. The measurement of the physical parameter relating to the pavement 2 acquired by the sensor 10 is inserted into the payload of the response radio signal, preferably together with the identifier ID(1) of the measuring device 1. As will be described in further detail here below, the processor 13 may wait for a timeslot assigned to it to transmit the response radio signal by means of the radio transceiver 12.

If, on the other hand, the payload of the radio signal received comprises a different value to the identifier ID(1) of the measuring device 1 and to the predefined value that indicates the broadcasting transmission mode, the processor 13 preferably ignores the radio signal received and returns the measuring device 1 to the sleeping mode (step 401).

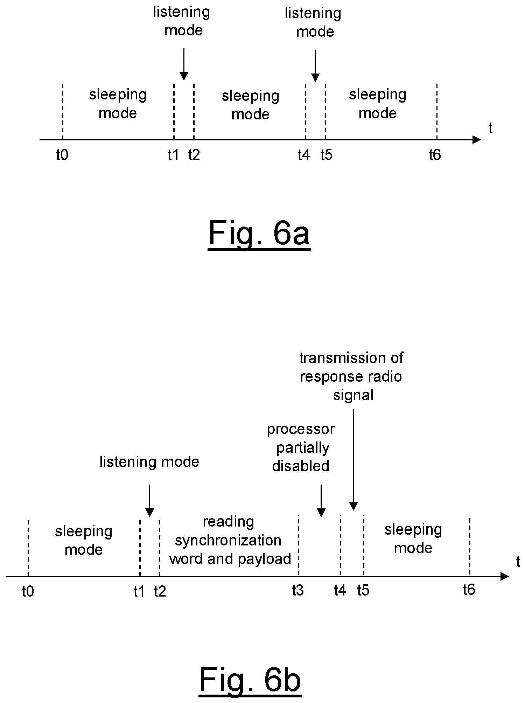

Figure 6a schematically shows operation of the measuring device 1 according to the embodiment just described, in the case in which no wake-up radio signal is received.

In this case, at time t0, the measuring device 1 enters into sleeping mode and remains there until time t1 = t0 + T1; at time t1, the measuring device 1 enters into listening mode and remains there until time t2 = t1 + T2; at time t2, the measuring device 1 enters into sleeping mode and remains there until time t3 = t2 + T1; at time t3, the measuring device 1 enters into listening mode and remains there until time t4 = t3 + T2; and so on. T1 and T2 may be, for example, 1200 ms and 8 ms respectively.

Figure 6b schematically shows operation of the measuring device 1 according to the embodiment just described, in the case in which a wake-up radio signal is received.

In this case, at time t0, the measuring device 1 enters into sleeping mode and remains there until time t1 = t0 + T1; at time t1, the measuring device 1 enters into listening mode and remains there until time t2 < t1 + T2, in which it detects a radio signal that comprises a sequence of symbols corresponding with the preamble 50. Starting from time t2, the check on the synchronization word and reading of the payload begins, which step terminates at time t3 and may have a duration t3-t2 for example of about 1225 ms. At time t3, preferably, while the sensor 10 acquires the measurement, the processor 13 is partially disabled up until time t4 = t3+T3. Then, at time t4, the measuring device 1 preferably transmits the response radio signal, which step terminates at time t5 and may have a duration of about 5 ms. When transmission of the response radio signal has terminated, the measuring device 1 returns to alternating the sleeping mode and the listening mode in an identical manner to what is described above with reference to Figure 6a.

The device 1 may be used for implementing a system for measuring a physical parameter relating to the pavement of a road infrastructure section.

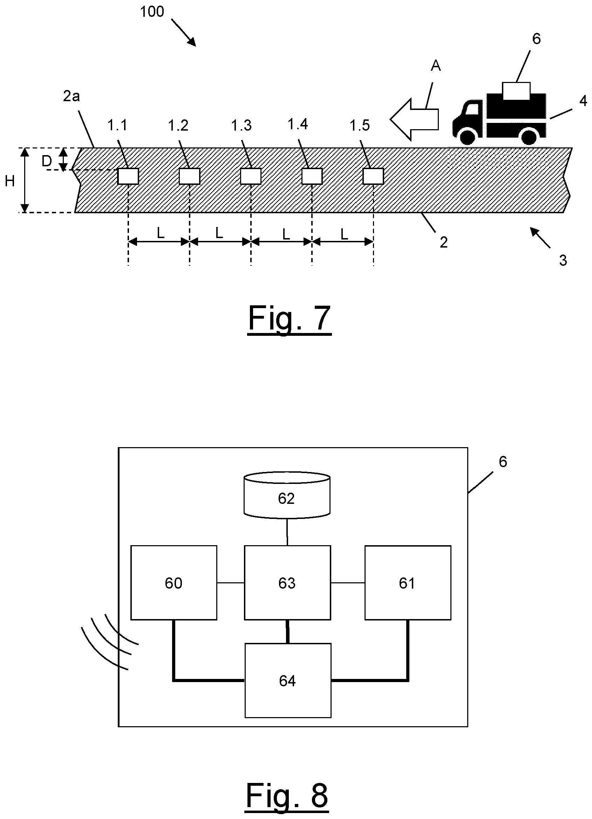

Figure 7 schematically shows a system 100 for measuring a physical parameter relating to the pavement of a road infrastructure section, according to an embodiment of the present invention.

The system 100 comprises a plurality of measuring devices identical to the measuring device 1 described above. By way of non-limiting example, in Figure 7 five measuring devices 1.1, 1.2, 1.3, 1.4, 1.5 are shown. The measuring devices 1.1, 1.2, 1.3, 1.4, 1.5 are installed inside the pavement 2 of a road infrastructure section 3, such as, for example, a road or motorway section. As discussed above with regard to the measuring device 1, the measuring devices 1.1, 1.2, 1.3, 1.4, 1.5 are installed during laying of the payment 2, at a depth D with respect to the surface 2a of the pavement 2.

The measuring devices 1.1, 1.2, 1.3, 1.4, 1.5 are installed in respective positions. Preferably, the positions of the measuring devices 1.1, 1.2, 1.3, 1.4, 1.5 are distributed along a same lane of the road infrastructure section 3, so that a vehicle 4 that is travelling in the lane (as indicated schematically by arrow A in Figure 7) transits by each of them. Preferably, the positions of the measuring devices 1.1, 1.2, 1.3, 1.4, 1.5 are substantially equally spaced. In particular, the measuring devices 1.1, 1.2, 1.3, 1.4, 1.5 are placed at a mutual distance L comprised between 100 m and 500 m, for example 200 m.

The system 100 also comprises at least one control device 6. The control device 6 is preferably movable along the road infrastructure section 3. For example, the control device 6 is installable on board the aforementioned vehicle 4, which travels in a lane of the road infrastructure section 3 as indicated schematically by arrow A in Figure 7.

As shown schematically in Figure 8, the control device 6 comprises a radio transceiver 60. The radio transceiver 60 is preferably configured to communicate via radio with the radio transceiver 12 comprised in each of the measuring devices 1.n (n= 1, 2, 3, 4, 5). It therefore preferably uses a band and a modulation compatible with those used by the radio transceiver 12 (for example, as described above, band below 1 GHz and LoRa modulation or FSK modulation). The radio transceiver 60 preferably has a coverage range R comprised between 50 m and 150 m. For example, the coverage range R of the radio transceiver 60 may be 100 m or 130 m.

The control device 6 also preferably comprises a geographic position sensor 61. The geographic position sensor 61 is preferably configured to interact with a geolocation system (not shown in the drawings), such as for example a GPS (Global Positioning System), Galileo or Glonass system, in order to detect the geographic position of the control device 6.

The control device 6 also preferably comprises a memory 62. The memory 62 is preferably configured to store a list of measuring devices 1.n (n=1, 2, 3, 4, 5) comprised in the system 100. In the list, for each measuring device 1.n, its identifier ID(1.n) and data indicative of its geographic position POS(1.n) are preferably stored. The data indicative of the geographic position POS(1.n) of each measuring device 1.n are preferably in the form of geographic coordinates (xn; yn), where xn indicates the latitude of the device 1.n and yn indicates the longitude of the device 1.n. As will be described in further detail here below, the memory 62 is also preferably configured to store the measurements provided by the measuring devices 1.n.

The control device 6 also preferably comprises a processor 63 connected to the radio transceiver 60, to the geographic position sensor 61 and to the memory 62, in order to manage and coordinate operation of these components. The processor 63 may be implemented as a single device, or as a set of two or more devices mutually connected and cooperating with each other.

The control device 6 also comprises a battery 64. The battery 64 is preferably electrically connected (through an electrical circuit, not shown in Figure 8) to the radio transceiver 60, to the geographic position sensor 61 and to the processor 63, so as to supply electrical power to these components. The battery 64 is preferably a rechargeable battery, having a duration of some hours (for example, 16 hours). For example, the battery 64 may be a 2.4 Ah lithium polymer battery.

Optionally, the control device 6 may also comprise a display (not shown in the drawings) suitable for providing information on the operation of the control device 6 and of the system 100 as a whole. The display may also be an LCD display.

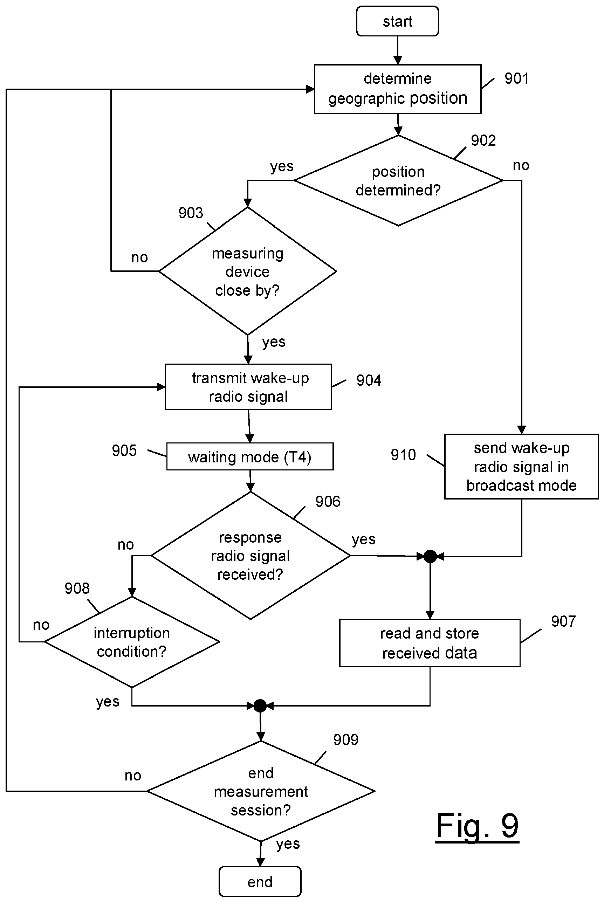

With reference to the flowchart of Figure 9, operation of the system 100 will now be described, and in particular of the control device 6 and its processor 63.

While the control device 6 is being moved along the road infrastructure section 3 on board the vehicle 4, the processor 63 preferably periodically detects the geographic position of the control device 6 through the geographic position sensor 61 (step 901). The detection period is preferably comprised between 0.1 sec and 2 sec, for example 1 sec. The speed of the vehicle 4 is preferably lower than or equal to 130 km/h.

As long as determination of the geographic position is operating (for example, because the GPS signal is correctly received by the geographic position sensor 61) (step 902), at each determination the processor 63 checks whether at least one of the measuring devices 1.n is close to the control device 6 (step 903). For this purpose, the processor 63 preferably compares the geographic position determined with the data indicative of the geographic position POS(1.n) of the measuring devices 1.n stored in the memory 62.

If, among the geographic positions stored, there is at least one geographic position POS(1.n*) that follows the determined geographic position in the travel direction of the vehicle 4 and whose distance from the determined geographic position is lower than or equal to the coverage range R of the radio transceiver 60, through the radio transceiver 60 the processor 63 preferably transmits the wake-up radio signal to the measuring device 1.n* placed in that position (step 904). According to an embodiment, the wake-up radio signal has an identical format to the radio signal 5 shown in Figure 5. Preferably, the payload 52 of the wake-up radio signal comprises the identifier ID(1.n*) of the measuring device 1.n* for which the wake-up radio signal is intended.

As described above with regard to the measuring device 1, the measuring device 1.n* also alternates periods of predefined duration T1 in sleeping mode with periods of maximum predefined duration T2 in listening mode. The measuring device 1.n* may therefore receive and respond to the wake-up radio signal as described above (acquisition of a measurement and transmission of a response radio signal containing the measurement acquired) only if the control device 6 transmits the wake-up radio signal while the measuring device 1.n* is in listening mode. If the control device 6 transmits the wake-up radio signal while the measuring device 1.n* is in sleeping mode, the measuring device 1.n* does not receive the wake-up radio signal and does not respond to it.

Therefore, the processor 63 is preferably configured to, after transmission of the wake-up radio signal in step 904, take the control device 6 into a waiting mode (step 905), in which the control device 6 waits to receive the response radio signal from the measuring device 1.n*. The control device 6 preferably remains in waiting mode for a period of predefined duration T4. The duration T4 may, for example, be comprised between 100 ms and 200 ms, for example 160 ms.

If, upon expiry of duration T4, the processor 63 determines that through the radio transceiver 60 a response radio signal has been received (step 906), it preferably reads from its payload the measurement of the physical parameter relating to the pavement 2 of the road infrastructure section 3 and stores it (step 907). Preferably, the measurement is stored in the memory 62 of the control device 6. Preferably, the measurement is stored together with one or more of the following data:
- identifier ID(1.n*) of the measuring device 1.n* by which the response radio signal has been transmitted;
- time-stamp that indicates date and transmission time of the wake-up radio signal;
- geographic position of the control device 6 at the transmission time of the wake-up radio signal; and
- speed of the control device 6 (i.e. of the vehicle 4 on board which the control device 6 is installed) at the transmission time of the wake-up radio signal.

If, on the other hand, upon expiry of duration T4, the processor 63 determines that through the radio transceiver 60 no response radio signal has been received (step 906), it preferably returns to step 904, transmitting the wake-up radio signal once again. Steps 904-906 are repeated cyclically, so that several transmission attempts of the wake-up radio signal are made.

The repetition of steps 904-906 (and therefore of the transmission attempts of the wake-up radio signal) is interrupted when the processor 63 determines that through the radio transceiver 60 a response radio signal has been received (step 907), or when an interruption condition occurs (step 908).

A first example of an interruption condition may be the reaching of a predefined number of transmission attempts of the wake-up radio signal.

As an alternative, it should be noted that, while the transmission attempts of the wake-up radio signal are being performed, the vehicle 4 on board which the control device 6 is installed continues to move along the road infrastructure section 3. Therefore, while it is performing the transmission attempts of the wake-up radio signal, the control device 6 could exceed the geographic position of the measuring device 1.n*. A second example of an interruption condition could therefore be reaching by the control device 6 of a geographic position that follows the geographic position of the measuring device 1.n* in the travel direction of the vehicle 4 by more than a certain predefined distance Lmax. The distance Lmax may be comprised between 20 m and 50 m, for example it can be equal to 35 m. In this case, therefore, the number of attempts performed by the control device 6 depends on the speed at which the vehicle 4 is travelling. If, for example, the speed of the vehicle 4 is 130 km/h, corresponding with 36.1 m/s, the control device 6 has at its disposal substantially two transmission attempts of the wake-up radio signal to the measuring device 1.n*.

If, upon occurrence of the interruption condition, no response radio signal has been received, the processor 63 may record in the memory 62 an indication of the fact that acquisition of the measurement by the measuring device 1.n* has not been successful.

Operation of the control device 6 therefore returns to steps 901-902, during which the processor 63 searches for the measuring device closest to its current position in order to send a new wake-up radio signal.

Operation of the control device is repeated until the end of the measurement session (step 909), which typically takes place when the vehicle 4 has stopped travelling on the road infrastructure section 3 in the pavement 2 of which the measuring devices 1.1, 1.2, 1.3, 1.4, 1.5 of the system 100 are installed.

In order to perform a new measurement session, the vehicle 4 with the control device 6 installed on board must once again travel on the road infrastructure section 3. It will be possible to perform measuring sessions for as long as the measuring devices 1.1, 1.2, 1.3, 1.4, 1.5 are operational, something that, as described above, may occur for a period of time up to 10 years, thanks to alternation of sleeping mode and listening mode.

According to a variant, rather than transmitting the wake-up radio signal to a specific measuring device, the control device 6 may transmit the wake-up radio signal in broadcasting mode. As mentioned above, in this case the wake-up radio signal preferably comprises in its payload a predefined value, which indicates the broadcasting transmission mode and which all the measuring devices 1.1, 1.2, 1.3, 1.4, 1.5 of the system 100 are configured to recognise. In this case, all the measuring devices that receive the wake-up radio signal can respond to the same wake-up radio signal. Preferably, in order to avoid collisions between response radio signals transmitted by the measuring devices that respond to the same wake-up radio signal, each measuring device 1.1, 1.2, 1.3, 1.4, 1.5 is configured with a respective timeslot during which it is authorised to transmit its own response radio signal to the control device 6. The timeslot can be used by the measuring device for the transmission of any response radio signal, or only in the case of response radio signals transmitted in response to a wake-up radio signal in broadcasting mode.

The broadcasting transmission mode may be used as an alternative to the transmission of a wake-up radio signal intended for a specific measuring device, or in combination with it.

For example, as shown in Figure 9, transmission in broadcasting mode can be performed when at step 902 the processor 63 determines that detection of the geographic position of the control device 6 has not been successful. This may occur, for example, when the vehicle 4 transits in a tunnel. In this case, being unable to determine the specific measuring device close to it, the processor 63 may perform a transmission of the wake-up radio signal in broadcasting mode (step 910). The processor 63 therefore reads and stores the data contained in the response radio signals received, as described above with regard to step 907.

Although reference is made in the above description to a single control device 6, the system 100 could comprise two or more control devices. Each of them could be installed on board a respective vehicle and deal with acquiring the measurements from a respective set of measuring devices. For example, a first control device on board a first vehicle could detect the measurements only from the measuring devices distributed along a first portion of the road infrastructure section 3, while a second control device on board a second vehicle could detect the measurements only from the measuring devices distributed along a second portion of the road infrastructure section 3.

The system 100 can be used for various applications.

For example, in the case in which the sensor 10 comprised in the measuring devices 1.1, 1.2, 1.3, 1.4, 1.5 is a temperature sensor, the system 100 could be used for monitoring the bearing capacity of the road pavement 2. In this case, a deflectometer (not shown in the drawings), in particular a deflectometer of the TSD type, is also fixed to the vehicle 4. Each bearing capacity measurement performed by the deflectometer could be acquired by the processor 63 and stored together with the geographic position of the vehicle 4 at the acquisition time and/or a timestamp that indicates the acquisition date and time. The measurements of bearing capacity can therefore be provided to a processor external to the control device 6, together with the temperature measurements acquired by the measuring devices 1.1, 1.2, 1.3, 1.4, 1.5. Correlating the bearing capacity measurements and the temperature measurements based on the acquisition position and/or acquisition date and time, it is thus possible to normalize the bearing capacity measurements provided by the deflectometer (for example, the SCI) with respect to a reference temperature, for example 20° C, in order to take account of the actual temperature of the pavement 2 in the position and in the time at which the deflectometer has acquired said bearing capacity measurement.

Advantageously, since the measuring devices 1.1, 1.2, 1.3, 1.4, 1.5 are installed in the pavement 2 at a distance D from the surface 2a of the pavement itself, the measurement of the temperature of the pavement 2 is more repeatable and stable with respect to, for example, a measurement of the temperature of the surface 2a of the pavement 2, a parameter subject to a high variability as a result of factors such as irradiation, wind or rain to which the surface of the pavement is exposed. Normalization of the bearing capacity measurements is therefore very accurate.

As a further example of application of the system 100, in the case in which the sensor 10 comprised in the measuring devices 1.1, 1.2, 1.3, 1.4, 1.5 is a temperature sensor, the system 100 could be used for monitoring the cooling of the asphalt concrete just laid.

In contexts such as, for example, the repaving of motorway sections, repaving interventions are indeed performed in very limited time windows (generally no longer than 8 hours). Within these time windows, it is planned to perform installation of the work site, removal of the previous pavement, laying of the new layers in asphalt concrete (which generally takes place at a temperature of around 150° C) and removal of the work site. Between the end of laying of the new layers of asphalt concrete and reopening to traffic, it is generally necessary to wait up to 3 hours to allow cooling of the pavement. This time period is variable as a function of certain factors, such as for example the thickness of the layers laid, the external temperature, the relative humidity and the thermal inertia of the road body. A measurement of the surface of the new pavement is not very indicative in this sense, since the surface, being in contact with the air, cools more quickly than the internal layers. In general, therefore, there is a tendency to overestimate the cooling time, for reasons of safety. A premature reopening of the road infrastructure section could cause immediate plastic deformations of the pavement just laid, which could represent a risk for travel.

The system 100 allows instead determining the temperature inside the pavement 2 just laid, and therefore allows a precise determination of the moment at which it is possible to reopen the road infrastructure section 3 to traffic safely, thereby optimising both the duration of the work site activities and their impact on traffic.

As disclosed above, the casing 15 of the measuring device 1 (and of each measuring device 1.n of the system 100) is configured to resist the conditions (in particular, temperature, pressure, vibrations and mechanical stresses) to which the measuring device is subjected during the laying process of the pavement 2. Specifically, according to embodiments of the present invention the casing 15 comprises a tubular body 15a in a plastic material (inside which the sensor 10, the clock unit 11, the radio transceiver 12 and the processor 13 are housed) and a block of resin 15b which encases the tubular body 15a.

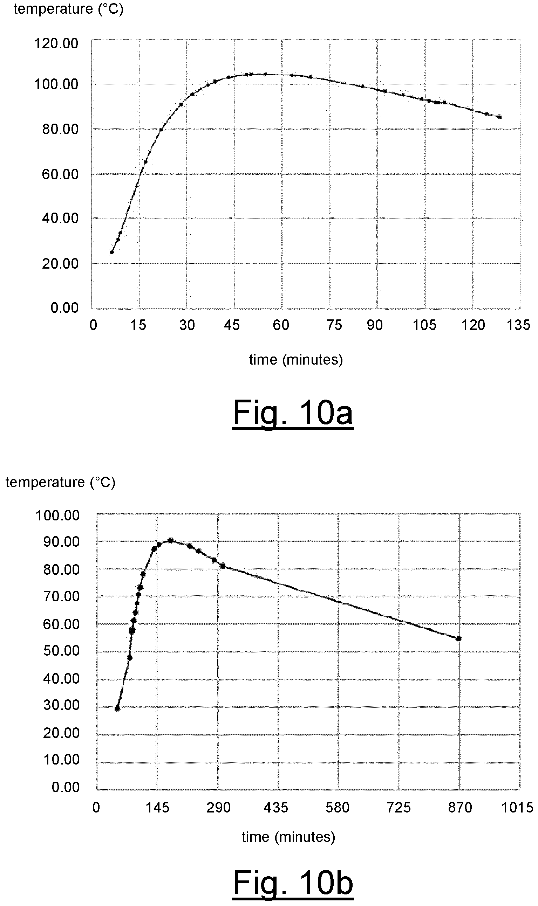

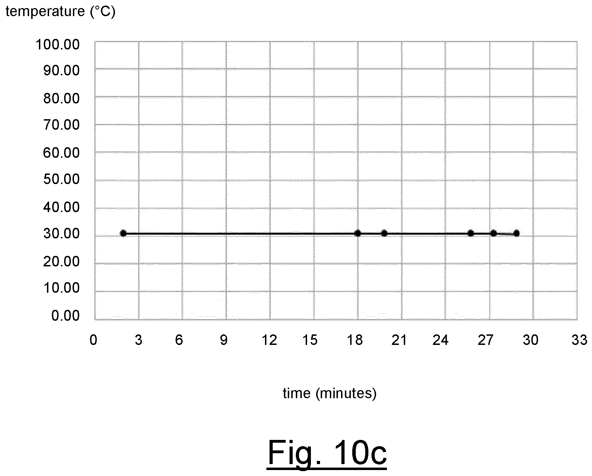

The Applicant has made some positive tests showing that the casing with the above structure is actually capable of resisting the conditions (in particular, temperature, pressure, vibrations and mechanical stresses) to which the measuring device is subjected during the laying process of the pavement 2. The results of such tests are shown in Figures 10a, 10b and 10c.

Specifically, Figure 10a shows the results of a laboratory test. The laboratory test was conducted as follows:
- a quantity of asphalt concrete was heated up to 150°C (namely, the typical temperature reached by the asphalt concrete during the laying process);
- a measuring device provided with a casing comprising a tubular body in PVC-C with diameter of 25 mm and length of 80 mm, encased in a block of epoxy resin having length of 110 mm, height of 40 mm and width of 70 mm, was embedded in the heated asphalt concrete;
   - the heated asphalt concrete with the embedded measuring device was used to manufacture a slab made of a double layer of asphalt concrete, composed by a 12 cm base course and a 4 cm open graded asphalt concrete, such that the overall thickness of the slab was 16 cm. The width and length of the slab were 400 cm and 300 cm, respectively. The slab was manufactured in accordance with the European standard EN 12697-33:2019: "Bituminous mixtures - Test method
      - Part 33: Specimen prepared by roller compactor".
- operation of the measuring device was monitored for an observation period of 2 hours following the manufacturing of the slab, by performing subsequent readings of the temperature value detected by its sensor. The range of the radio transceiver of the measuring device was also monitored for the same observation period.

As to the range, a maximum value of 300 m was measured. In any case, the value of the range was above 100 m during the whole observation period.

As to the detected temperature values, Figure 10a shows a graph of the variation of the detected temperature values during the observation period. The graph shows that, during a first period of about 45 minutes, the sensor gradually reached a thermal equilibrium with the surrounding asphalt concrete. Upon reaching the thermal equilibrium, the detected temperature reached its maximum value. Starting from this point, all the readings of the detected temperature value coincided with the actual temperature of the asphalt concrete, which was slowly cooling down.

This test therefore confirmed that the measuring device was properly operating during the whole process, meaning that the casing was capable of adequately protecting the measuring device components (sensor, processor and radio transceiver) from the conditions (in particular, temperature, pressure, vibrations and mechanical stresses) to which the measuring device was subjected during its embedding in the heated asphalt concrete and subsequent manufacturing of the slab.

Figure 10b shows the results of a field test. The field test was conducted during an intervention for replacing the pavement of a road section. The intervention provided for removing a layer of 19 cm of the pre-existing pavement by milling, and then laying a new pavement made of a double layer of asphalt concrete, composed by a 15 cm base course and a 4 cm open graded asphalt concrete. The new pavement was laid by the known technic HMA (Hot mix Asphalt) and compacted by rolling in a known way.

The measuring device was placed on the ground after the milling, and then the new pavement was laid and compacted on top of it. Then, operation of the measuring device was monitored for an observation period of about 5 hours, by performing subsequent readings of the temperature value detected by its sensor. A final reading of the temperature value was also performed after about 14 hours.

Figure 10b shows a graph of the variation of the detected temperature values during the observation period. The variation was similar to that shown in Figure 10a, namely during a first period the sensor gradually reached a thermal equilibrium with the surrounding asphalt concrete, upon which the detected temperature reached its maximum value. Starting from this point, the detected temperature value then coincided with the actual temperature of the asphalt concrete, which was slowly cooling down.

This field test therefore confirmed the capability of the casing of adequately protecting the measuring device components (sensor, processor and radio transceiver) even in field operating conditions.

Figure 10c shows the results of an additional field test. This additional field test was conducted on the same measuring device installed during the previous field test, but few months later. The road section with the renewed pavement had already been opened to traffic, so that the readings of the temperature value provided by the measuring device could be obtained by means of a control device similar to the control device 6 described above.

The readings were obtained both stationarily (namely, with the control device stationary few meters away from the measuring device), and dynamically (namely, with the control device moving along the road section on board a vehicle at a speed of about 130 km/h).

Figure 10c shows a graph of the readings of the detected temperature value during the observation period. A substantially constant value of 30°C was repeatedly read, confirming that the measuring device was still properly operating over time, while the pavement is in operating conditions.

## Claims

1. Measuring device (1) for measuring a physical parameter relating to the pavement (2) of a road infrastructure section (3), the measuring device (1) comprising a sensor (10), a clock unit (11), a radio transceiver (12) and a processor (13), wherein:
- the measuring device (1) is configured to be operated cyclically in a sleeping mode for a period of a first predefined duration T1 and in a listening mode for a period of a second maximum predefined duration T2, wherein in sleeping mode only the clock unit (11) is switched on for counting the first predefined duration T1 and wherein in listening mode also the radio transceiver (12) and the processor (13) are switched on; and
- the processor (13) is configured to, when in listening mode a wake-up radio signal is detected, in response to detection of the wake-up radio signal, acquire by means of the sensor (10) a measurement of the physical parameter relating to the pavement (2) at the position of the measuring device (1) and, by means of the radio transceiver (12), transmitting the acquired measurement via radio.

2. Measuring device (1) according to claim 1, wherein the sensor (10) is a temperature sensor suitable for acquiring at least one measurement of the temperature of a portion of the pavement (2) adjacent to the measurement device (1).

3. Measuring device (1) according to claim 1 or 2, also comprising a battery (14) electrically connected to the sensor (10), to the clock unit (11), to the radio transceiver (12) and to the processor (13), so as to supply electrical power thereto.

4. Measuring device (1) according to any one of the preceding claims, also comprising a casing (15) suitable for containing the sensor (10), the clock unit (11), the radio transceiver (12) and the processor (13), wherein the casing (15) comprises:
- a tubular body (15a) in a plastic material, inside which the sensor (10), the clock unit (11), the radio transceiver (12) and the processor (13) are housed; and
- a block of resin (15b) which encases the tubular body (15a).

5. The measuring device (1) according to claim 4, wherein the plastic material comprises chlorinated polyvinyl chloride and the resin comprises an epoxy resin.

6. Measuring device (1) according to any of the preceding claims, wherein the ratio between the first predefined duration T1 and the second maximum predefined duration T2 is comprised between 100 and 200.

7. Measuring device (1) according to any of the preceding claims, wherein the processor (13) is configured to, in listening mode:
- if, upon expiry of the second maximum predefined duration T2, it determines that no radio signal has been received comprising a sequence of symbols corresponding to a preamble (50) of an expected wake-up radio signal, return the measuring device (1) in sleeping mode;
- if, before expiry of the second maximum predefined duration T2, it determines that a radio signal has been received comprising a sequence of symbols corresponding to the preamble (50), determine whether in the received radio signal the sequence of symbols is followed by a sequence of bytes corresponding to a synchronization word (51) of the expected wake-up radio signal;
- in the negative, return the measuring device (1) to the sleeping mode; and
- in the affirmative, determine whether the received radio signal comprises an identifier of the measurement device (1) or a predefined value indicative of a broadcasting transmission mode of the expected wake-up radio signal;
- in the affirmative, conclude that the received radio signal is the expected wake-up radio signal; and
- in the negative, ignore the received radio signal and return the measuring device (1) to the sleeping mode.

8. System (100) for measuring a physical parameter relating to the pavement (2) of a road infrastructure section (3), the system (100) comprising:
- a plurality of measuring devices (1.n) suitable for being installed within the pavement (2) in respective positions along the road infrastructure section (3), the plurality of measuring devices (1.n) being suitable for being installed during the laying phase of the pavement (2), each of the measuring devices (1.n) being according to any of the preceding claims; and
- a control device (6) movable along the road infrastructure section (3), the control device (6) being configured to, while moving along the road infrastructure section (3), transmit a wake-up radio signal to at least one of the measuring devices (1.n) and, in response to the wake-up radio signal, receiving via radio from the at least one of the measuring devices (1.n) a measurement of the physical parameter relating to the pavement (2) of the road infrastructure section (3).

9. System (100) according to claim 8, wherein at least one of the plurality of measuring devices (1.n) is suitable for being located at a depth D with respect to the surface (2a) of the pavement (2), the depth D being greater than 5 cm.

10. System (100) according to claim 8 or 9, wherein the respective positions of the measuring devices (1.n) are substantially equally spaced by a distance L comprised between 100 m and 500 m.

11. System (100) according to any of claims 8 to 10, wherein the control device (6) comprises a geographic position sensor (61) and a memory (62) which stores, for each measuring device (1.n), data indicative of the geographical position of the measuring device (1.n), the control device (6) being configured to:
- periodically detect the geographic position of the control device (6) through the geographic position sensor (61);
- on the basis of the stored data indicative of the geographical position of the measuring devices (1.n), check whether at least one of the measuring devices (1.n) is present near the control device (6); and
- in the affirmative, transmit the wake-up radio signal to the at least one of the measuring devices (1.n) present near the control device (6).

12. System (100) according to any of claims 8 to 11, wherein the control device (6) is configured to transmit the wake-up radio signal in broadcasting mode.

13. System (100) according to any of claims 8 to 12, wherein the control device (6) is configured to:
- after transmission of the wake-up radio signal, enter a waiting mode in which the control device (6) waits to receive via radio from the at least one of the measuring devices (1.n) the measurement of the physical parameter relating to the pavement (2) of the road infrastructure section (3) for a period of predefined duration T4; and
- if, upon expiry of the predefined duration T4, the control device (6) determines that no measurement of the physical parameter relating to the pavement (2) of the road infrastructure section (3) has been received, transmit again the wake-up radio signal.

14. System (100) according to any of claims from 8 to 13, also comprising a deflectometer movable along the road infrastructure section (3) substantially integral with the control device (6), the deflectometer being configured to, while moving along the road infrastructure section (3) integrally with the control device (6), acquire data indicative of the bearing capacity of the pavement (2) of the road infrastructure section (3).

15. A method for measuring a physical parameter relating to the pavement (2) of a road infrastructure section (3), the method comprising:
- installing a plurality of measuring devices (1.n) within the pavement (2) in respective positions along the road infrastructure section (3), the plurality of measuring devices (1.n) being installed during the laying phase of the pavement (2), each one of the measuring devices (1.n) comprising a sensor (10), a clock unit (11), a radio transceiver (12) and a processor (13);
- operate each one of the measuring devices (1.n) cyclically in a sleeping mode for a period of a first predefined duration T1 and in a listening mode for a period of a second maximum predefined duration T2, wherein in sleeping mode only the clock unit (11) is switched on for counting the first predefined duration T1 and wherein in listening mode also the radio transceiver (12) and the processor (13) are switched on;
- by a control device (6) moving along the road infrastructure section (3), transmitting a wake-up radio signal to at least one of the measuring devices (1.n);
- by the processor (13) of at least one of the measuring devices (1.n) in listening mode, detecting the wake-up radio signal and, in response to detection of the wake-up radio signal, acquiring by means of the sensor (10) a measurement of the physical parameter relating to the pavement (2) at the position of the measuring device (1) and, by means of the radio transceiver (12), transmitting the acquired measurement via radio to the control device (6).
